# EUROPEAN PATENT SPECIFICATION

(11) **EP 0 440 825 B1**
(45) Date of publication and mention of the grant of the patent: **18.05.1994**
(21) Application number: 90912963.7
(22) Date of filing: 30.08.1990
(51) Int. Cl.: E02D 3/12

(54) **METHOD OF RE-USING SLURRY IN GROUND IMPROVING CONSTRUCTION WORK**
VERFAHREN ZUR WIEDERVERWENDUNG DES SCHLAMMS BEI DER BODENSTABILISIERUNG
PROCEDE DE REUTILISATION DE LA BOUE LORS DE TRAVAUX DE STABILISATION DU SOL

(30) Priority: 30.08.1989 JP 221676/89
(43) Date of publication of application: 14.08.1991
(73) Proprietor: Kajima Corporation, Tokyo 107 (JP); NEC CORPORATION, Tokyo (JP); SUMITOMO CEMENT CO. LTD., Chiyoda-ku Tokyo 101 (JP); CHEMICAL GROUTING COMPANY LTD., Minato-ku, Tokyo 107 (JP); SHOEI YAKUHIN CO., LTD., Joto-ku, Osaka-shi, Osaka 536 (JP)
(72) Inventor: YOSHIDA, Hiroshi, Minato-ku Tokyo (JP); TSUTAOKA, Takanori, Minato-ku Tokyo (JP); IMAI, Toshio, Saitama-ken (JP); YOSHIHARA, Masahiro, Chiba-ken (JP); SHIBAZAKI, Mitsuhiro CHEMICAL GROUTING COMPANY Ltd, Tokyo (JP); KUBO, Hiroaki CHEMICAL GROUTING COMPANY Ltd., Tokyo (JP); JINBO, Toshitsugu CHEMICAL GROUTING COMPANY Ltd., Tokyo (JP); MIYAZAKI, Hiroshi, Hyogo-ken (JP)
(74) Representative: Lehn, Werner, Dipl.-Ing.
(86) International application number: PCT/JP90/01100
(87) International publication number: WO 91/03605

(56) References cited:
- JP-A- 6 332 016
- JP-A-60 141 917

## Description

The present invention relates to a method of reusing slurry in a ground improving method in which a hardening agent is injected into the ground, wherein the slurry discharged upon working is collected, regenerated and reused as an injection material, namely , a hardening agent.

Depending on the ground improving method, a certain amount of hardening agent contained in slurry is discharged as industrial waist. In addition, the discharge amount of slurry depends on the working condition and working method. In order to save hardening agent and avoid problems with respect to the otherwise generated industrial waist, a strong demand exists to reuse the hardening agent contained in the slurry.

When reusing the slurry, a technique to measure a quantity of hardening agent contained in the discharged slurry is inevitable. As such a technique to measure an amount of hardening agent contained, a calcium analysis method, a pH measuring method, and a boron tracer method can be mentioned.

The calcium analysis method is a method whereby after an amount of calcium in a consolidation sample was measured, a calcium element component of the hardening agent is counted back and a content of hardening agent is obtained from the calcium element component. However, the above method has a problem such that a fairly large labor is expended to measure the content.

The pH measuring method intends to estimate a range of an amount of hardening agent on the basis of the numerical value obtained from the working processes (actual results) from an alkalinity (pH) which the hardening agent liquates and physical properties (specific gravity and the like) of the slurry discharged. However, according to the method, since the numerical values obtained from the actual results are used, there is a problem such that the latest information cannot be obtained for every ground.

The boron tracer method is a method whereby by using the principle in which boron atoms absorb neutrons, boron atoms are mixed into the hardening agent so as to keep a concentration of boron atoms constant, the number of boron atoms is measured, and thereby obtaining a quantity of hardening agent. The above method has an advantage such that the quantitative measurement of the hardening agent can be performed. However, there is a problem such that a radioactive isotope (RI) must be used upon measurement.

The present invention is made in consideration of the problems of the conventional techniques mentioned above and it is an object of the invention to provide a method of reusing a slurry in a ground improving method, in which a quantity of hardening agent contained in a discharged slurry can be accurately suitably measured and the demand to reuse the slurry (hardening agent contained in the slurry) can be satisfied.

The above object is solved according to the invention by a method of reusing slurry in a ground improving method, whereby a hardening agent is injected into the ground, comprising the steps of adding a permeable substance to the hardening agent to be injected; collecting the slury discharged during execution of the ground improving method; measuring a physical parameter indicative of the permeability of the hardening agent, to which said permeable substance has been added, contained in said collected slurry; calculating the quantity of the hardening gent contained in the collected slurry from said measured physical parameter; calculating the difference between the injection amount of the hardening agent which is needed for execution of the ground improving method and the quantity of hardening agent contained in the collected slurry; and using the collected slurry together with an amount of hardening agent, to which said permeable substance has been added, corresponding to the calculated difference in said ground improving method.

In a prefered embodiment, cement is used as a hardening agent and ferrite is used as a material having the permeability.

It is now assumed that a grain diameter of a cement particle is set to dₐ, a grain diameter of a ferrite particle is set to d_{b}, a specific gravity of a cement particle is set to δₐ, a specific gravity of a ferrite particle is set to δ_{b}, and a specific gravity of the suspention of cement and ferrite is set to δₛ. It is now preferable to select the cement particles and the ferrite particles so as to be adapted to the following equation$\frac{{\text{d}}_{\text{b}}}{{\text{d}}_{\text{a}}} \text{=} \sqrt{\frac{{\text{δ}}_{\text{a}} {\text{- δ}}_{\text{s}}}{{\text{δ}}_{\text{b}} {\text{- δ}}_{\text{s}}}}$
This is because cement and ferrite perform the same motion in the mixture and a distribution ratio in the mixture is set to be constant and the content of cement in the slurry can be accurately calculated.

According to the invention having the construction as mentioned above, by collecting the discharged slurry and measuring the physical amount indicative of the permeability characteristic of the hardening agent contained in the slurry, an amount of hardening agent contained in the collected slurry, that is, an amount of hardening agent to be collected is calculated. By comparing an amount of hardening agent which is needed to improve the ground and has previously been known and the amount of collected hardening agent and by obtaining the difference therebetween, the amount of hardening agent to be newly injected is calculated.

As mentioned above, according to the invention, since the amount of collected hardening agent is calculated simultaneously with the collection of the slurry, the amount of hardening agent to be newly injected can be controlled in a real-time manner on the basis of the latest data (numerical value). Thus, the slurry can be used again in an fully automated system.

In the invention, a material having the permeability is used as a tracer and the material having the permeability is harmless for the human body as compared with a radioactive material or the like. In addition, since the hardening agent is used again, an amount of hardening material to be processed as an industrial waste decreases. Therefore, according to the execution of the invention, the generation of public pollution can be also suppressed.

On the other hand, by properly selecting and permeable material to be added, the motions of the added permeable material and the hardening agent can be made coincident, so that the calculated amount of the collected hardening agent also has an accurate numerical value.
- Fig. 1: is a block diagram showing a procedure of an embodiment of the present invention;
- Fig. 2: is an explanatory diagramm of the measurement principle of the invention;
- Fig. 3: is an explanatory diagram of a measuring apparatus which is used in the invention;
- Fig. 4: is a characteristic graph showing permeabilities and contents of cement which were measured by using the measuring apparatus of Fig. 3;
- Fig. 5: is a diagram showing a table of the accuracies of the results of the measurements which were measured in accordance with the measurement principle of the invention; and
- Fig. 6: is a diagram showing a table of the strengths of respective portions of the columnar consolidation bodies constructed in accordance with the invention.

An embodiment of the invention will be describe hereinbelow with reference to the drawings.

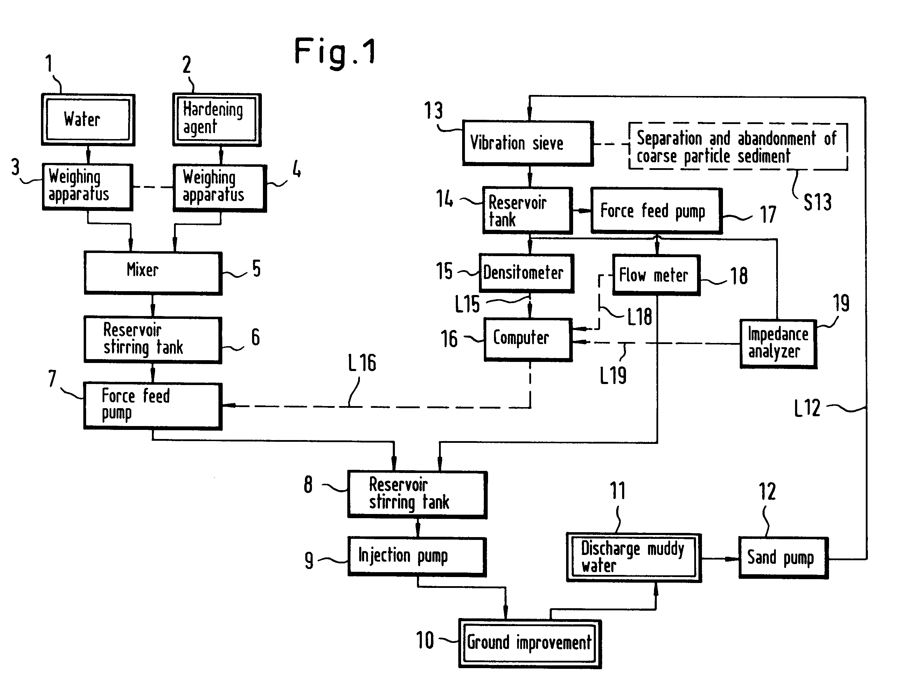

Fig. 1 shows an outline of an embodiment to which the invention was applied in what is called a column jet grouting method. After a hardening agent 2 comprising water 1 and cement was measured by weighing apparatuses 3 and 4, respectively, it is injected into a mixer 5 and mixed and stirred. The stirred mixture of water and hardening agent is transferred into a first reservoir stirring tank 6 and properly stirred. In this stirring state, the stirred mixture is held in a state suitable for the ground improving work. Magnetic particles are uniformly mixed in the hardening agent 2.

When executing the ground improving work, the stirred mixture of water and hardening agent is first fed into a second reservoir stirring tank 8 by a force feed pump 7 and is subsequently sent to a ground improvement working site 10 by an injection pump 9. Although not clearly shown, in the ground improvement working site 10, a hole is dug into the ground, the stirred mixture of water and hardening agent is spouted out into the hole, and a columnar consolidation body is formed.

The stirred mixture which was not used to form the columnar consolidation body is discharged as a discharge muddy water or slurry 11 together with the sediment at the working site from the hole dug in the working site. The slurry 11 is sent to a hardening agent collecting step (line L₁₂) by a sand pump 12. The coarse particle sediment contained in the slurry which is sent through the line L₁₂ is separated by a vibration sieve 13 and discharged, so that the slurry is brought into a state in which it can be reused (step S₁₂).

The slurry from which the coarse particle sediment was separated and which can be reused is sent to a reservoir tank 14 and its density is measured in the reservoir tank by a densitometer 15. The measured density is input to a computer 16 (line L₁₅). On the other hand, the reusable slurry is sent from the reservoir tank 14 into the second reservoir stirring tank 8 through a flow meter 18 by a force feed pump 17. At this time, a flow amount of the reusable slurry which was measured by the flow meter 18 is input to the computer 16 (line L₁₈). The impedance as a physical parameter indicative of the permeability characteristic of the hardening agent contained in the reusable slurry is measured by an impedance analyzer 19 and input to the computer 16 (line L₁₉).

When the density, flow amount, and impedance of the reusable slurry are input to the computer 16, the computer calculates from those measured values the amount of hardening agent contained in the slurry, that is, the amount of hardening agent collected. The difference between the amount of hardening agent which is needed for the ground improving work and the amount of collected hardening agent is calculated by the computer 16 and a control signal is transmitted from the computer 16 to the force feed pump 7 so as to supply the hardening agent of the amount corresponding to the calculated difference from the first reservoir stirring tank 6 (line L₁₆). Thus, the amount of collected hardening agent is obtained in a real-time manner and the hardening agent of the amount which is necessary and enough for the ground improving work is accurately supplied.

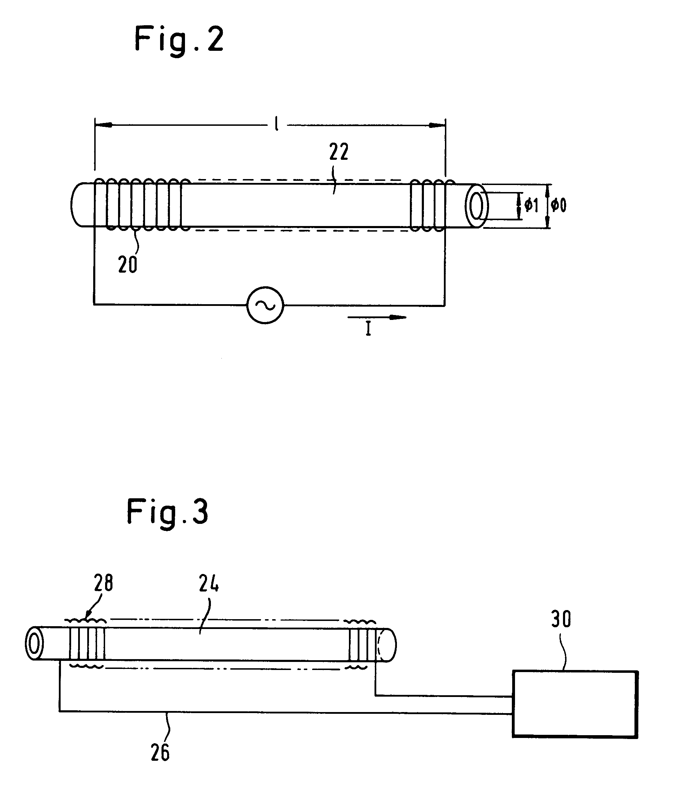

The principle in which the impedance exhibits the permeability characteristic of the hardening agent will now be described with reference to Fig. 2. Fig. 2 shows a magnetic material 22 which is inserted into a hollow coil 20.

An impedance Z₀ of the hollow coil 20 is given by the following equation$\text{Z₀ = R₀ + jωL₀}$
when it is assumed that an inductance is set to L₀, an internal resistance is set to R₀, and a pure imaginary number is set to j.

When a permeability of the magnetic material 22 assumes µ and the magnetic material 22 is inserted into the hollow coil 20, an impedance Z₁ of the coil is given by the following equation${\text{Z₁ = R₀ + ωL₀(S₁/S₀)µ}}_{\text{B}} {\text{+ {jωL₀(S₀ - S₁ + µ}}_{\text{A}} \text{S₁)/S₀}}$
where, µ_{A} is a real number part of the permeability µ and µ_{B} is an imaginary number part of the permeability µ. That is, the permeability µ is expressed by the equation${\text{µ = µ}}_{\text{A}} {\text{- jµ}}_{\text{B}} \text{.}$

On the other hand, the impedance Z₁ of the coil when the magnetic material 22 is inserted into the hollow coil 20 is expressed by the equation$\text{Z₁ = R₁ + jωL₁}$
Therefore,${\text{R₁ = R₀ + ωL₀(S₁/S₀)µ}}_{\text{B}}$$\text{L₁ = L₀(S₀ - S₁ + µ S₁)/S₀}$
By deriving µ_{A} and µ_{B} from the above two equations, respectively,${\text{µ}}_{\text{A}} \text{= (S₀/S₁){(L₁/L₀) - 1} + 1}$${\text{µ}}_{\text{B}} \text{= (S₀/S₁){(R₁ - R₀)/ωL₀}}$

Therefore, the permeability µ of the magnetic material 22 can be obtained if the impedance Z₁ and a resistance of the coil in a hollow state in which the magnetic material 22 is not inserted and an impedance Z₀ and a resistance of the coil in a state in which the magnetic material 22 is inserted are known. In this case, if a substance comprising a material having no magnetic loss until a high frequency range is used as a magnetic material 22, µ_{B} = 0 and only µ_{A} exists at the measuring frequency. Therefore, if a change in inductance of the coil is known, the permeability µ of the magnetic material 22 is obtained.

In the case where the magnetic particles were mixed and distributed into a non-magnetic material, the permeability of the mixture changes depending on a concentration of the magnetic material. If the permeability of the mixture is known, an amount of magnetic material can be known. In the invention, since the magnetic material is uniformly mixed into the hardening agent at a predetermined ratio, the amount of magnetic material is proportional to the amount of hardening agent. Therefore, the amount of hardening agent can be obtained if the amount of magnetic material is known from the permeability of the mixture.

Fig. 3 shows an example of an apparatus for measuring the permeability according to the invention. In Fig. 3, a coil 28 is formed by winding a covered copper wire 26 around a glass tube 24 and the collected slurry (not shown in Fig. 3) is allowed to flow in the glass tube 24. The inductance of the coil 28 is measured by a impedance analyzer 30. The permeability of the slurry flowing in the glass tube 24 can be obtained on the basis of the foregoing principle.

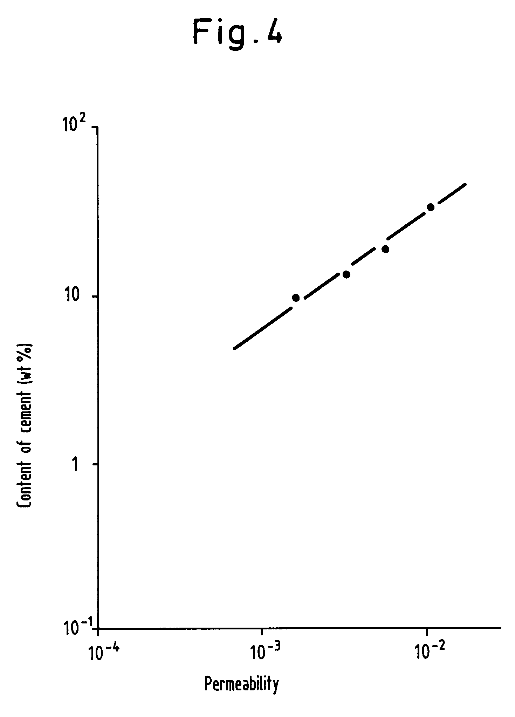

Fig. 4 shows the results of the measurements in the detection of the concentration of ferrite cement in the case where a mixture of the water and ferrite cement which is obtained by mixing the ferrite particles having an average grain diameter of 2.5 µm into 5 weight % of cement (average grain diameter is 15 µm) was allowed to flow in the glass tube 24 in place of the slurry and the concentration of ferrite cement was variously changed. As will be obviously understood from Fig. 4, the permeability changes in proportion to the concentration of the ferrite cement, and if the permeability is known, the concentration, namely, content of ferrite cement is obtained.

To obtain the content of hardening agent (ferrite cement) from the permeability, it is necessary that the magnetic particles as a tracer are uniformly mixed into the hardening agent as a non-magnetic material and that when the hardening agent was diluted by the water or the like, the magnetic material and the hardening agent perform the same motion. In other words, in the case where the magnetic particles precipitate in the hardening agent or the magnetic particles are separated from the hardening agent, the proportional relation between the permeability and the content of the hardening agent is not satisfied and the invention cannot be embodied. The conditions in which the magnetic particle and the hardening agent perform the same motion will now be described hereinbelow. It is now assumed that cement is used as a hardening agent and ferrite is used as a magnetic particle.

In the interference drop in which a number of particles drop while exerting influences on each other in the suspension, in a range where the Stokes' law is satisfied, a drop velocity Vₛ of the particle is given by the following equation${\text{V}}_{\text{s}} {\text{= {(δ - δ}}_{\text{s}} {\text{)d²}/(18η}}_{\text{s}} \text{)}$
where, δ is the specific gravity of the particle, δₛ is the specific gravity of the suspension, d is the diameter of particle, and δₛ denotes the viscosity of the suspension

For instance, in the particles such as cement and ferrite whose specific gravities differ, the particles having the equal drop velocity are called uniform speed drop particles and a ratio of sizes of the uniform velocity drop particles is called an uniform velocity drop ratio. The uniform velocity drop ratio is given by the equation$\frac{{\text{d}}_{\text{b}}}{{\text{d}}_{\text{a}}} \text{=} \sqrt{\frac{{\text{δ}}_{\text{a}} {\text{- δ}}_{\text{s}}}{{\text{δ}}_{\text{b}} {\text{- δ}}_{\text{s}}}}$
where, dₐ and d_{b} denote diameters of two kinds of particles and δₐ and δ_{b} indicate specific gravities of two kinds of particles.

By selecting cement and ferrite which satisfy the condition which is given by the above equation, both of cement and ferrite perform the same motion in the suspension, that is, mixture fluid. However, since there is a variation in grain diameters of the actual particles, to meet the condition of the above equation, it is preferable that the grain diameter of the particle having a larger specific gravity is set to be further smaller than the numerical value which is obtained from the above equation.

Explanation will now be made by comparing the results of the measurements in the case where ferrite cement of 5 weight % was used as a hardening agent mixed with the magnetic particles and the permeability of the slurry discharged was obtained and the amount of collected cement was measured according to the embodiment shown in Fig. 1 and the results of the measurements in the case where a CaO quantity was obtained by the chemical analysis and the amount of collected cement was measured from the CaO quantity. The test conditions are set as follows. A ferrite concentration was set to 5 weight %. An average grain diameter of ferrite was set to 2.4 µm. A length (column length) of columnar consolidation body which is formed by the ground improving work was set to 4 m. An injection agent concentration (W/C) was set to 100%. A nozzle pull-up velocity in the ground improving work was set to 5 cm/min.

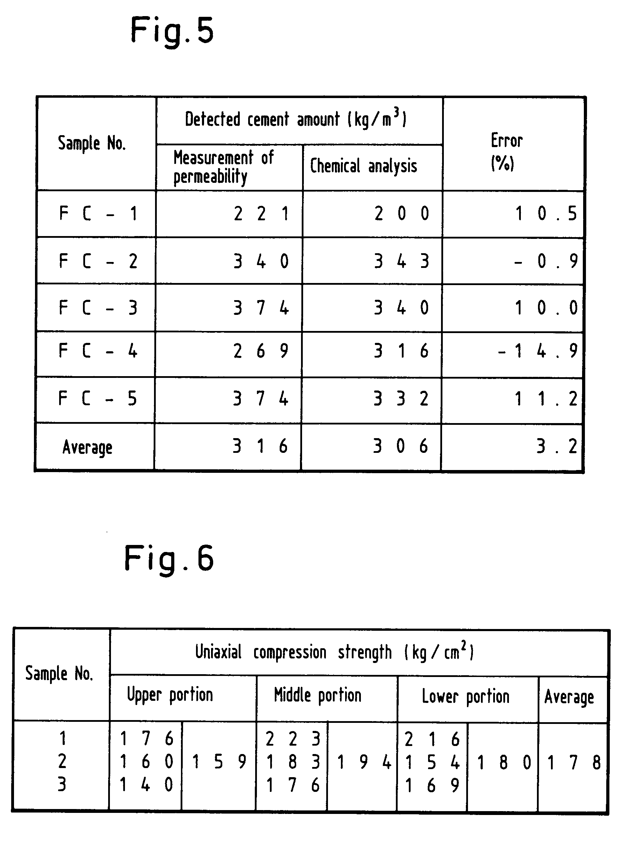

As will be obviously understood from Fig. 5, the results of the measurements of the cement amount according to the embodiment shown in Fig. 1 exhibit only an error of about 10% as compared with the results of the measurements by the chemical analysis. Therefore, it will be understood that when the invention is put into praxis, the amount of collected cement was accurately calculated.

Fig. 6 shows the results of the strength tests of the columnar consolidation bodies constructed by using the slurry (hardening agent contained therein) which is reused according to the invention.

As will be obvious from the results of the strength tests, it will be understood that the columnar consolidation bodies constructed by embodying the invention have the uniform strength and have the extremely good strength characteristics.

## Claims

1. A method of reusing slurry in a ground improving method, whereby a hardening agent is injected into the ground, the method comprising the steps of
- adding a permeable substance to the hardening agent to be injected;
- collecting the slurry discharged during execution of the ground improving method;
- measuring a physical parameter indicative of the permeability of the hardening agent, to which said permeable substance has been added, contained in said collected slurry;
- calculating the quantity of the hardening agent contained in the collected slurry from said measured physical parameter;
- calculating the difference between the injection amount of the hardening agent which is needed for execution of the ground improving method and the quanity of hardening agent contained in the collected slurry; and
- using the collected slurry together with an amount of hardening agent, to which said permeable substance has been added, corresponding to the calculated difference in said ground improving metod.

2. The method of reusing slurry in a ground improving method according to claim 1,
wherein cement is used as a hardening agent and ferrite is used as a permeable substance.

3. The method of reusing slurry in a ground improving method according to claim 2,
wherein the cement particles and the ferrite particles are selected to meet the following equation$\frac{{\text{d}}_{\text{b}}}{{\text{d}}_{\text{a}}} \text{=} \sqrt{\frac{{\text{δ}}_{\text{a}} {\text{- δ}}_{\text{s}}}{{\text{δ}}_{\text{b}} {\text{- δ}}_{\text{s}}}}$ wherein dₐ ist the grain diameter of a cement particle, d_{b} is the grain diameter of a ferrite particle, δₐ is the specific gravity of a cement particle, δ_{b} is the specific gravity of a ferrite particle, and δₛ is the specific gravity of the suspension of cement and ferrite.

## Patentansprüche

1. Verfahren zur Wiederverwendung von Rohschlamm bei einem Bodenstabilisierungsverfahren, bei welchem ein Härtemitteln in den Boden eingespritzt wird, mit folgenden Schritten:
- Zufügung einer eine magnetische Permeabilität aufweisenden Substanz zum einzuspritzenden Härtemittel;
- Sammeln des Rohschlamms, der während der Ausführung des Bodenstabilisierungsverfahrens ausgestoßen wird;
- Messung eines physikalischen Parameters, welcher die magnetische Permeabilität des Härtemittels anzeigt, welchem die magnetische Permeabilität aufweisende Substanz zugefügt wurde, und welches in dem gesammelten Schlamm enthalten ist;
- Berechnung der Menge des Härtemittels, welches in dem gesammelten Rohschlamm enthalten ist, aus dem gemessenen physikalischen Parameter;
- Berechnung der Differenz zwischen der Einspritzmenge des Härtemittels, die zur Ausführung des Bodenstabilisierungsverfahrens erforderlich ist, und der Menge an in dem gesammelten Rohschlamm enthaltenen Härtemittel; und
- Verwendung des gesammelten Rohschlamms zusammen mit einer Menge an Härtemittel, welchem die magnetische Permeabilität aufweisende Substanz zugefügt wurde, entsprechend der berechneten Differenz in dem Bodenstabilisierungsverfahren.

2. Verfahren zur Wiederverwendung von Rohschlamm in einem Bodenstabilisierungsverfahren nach Anspruch 1,
bei welchem Zement als Härtemittel und Ferrit als magnetische Permeabilität aufweisende Substanz verwendet wird.

3. Verfahren zur Wiederverwendung von Rohschlamm in einem Bodenstabilisierungsverfahren nach Anspruch 2,
bei welchem die Zementteilchen und die Ferritteilchen so ausgewählt sind, daß sie nachstehender Gleichung genügen$\frac{{\text{d}}_{\text{b}}}{{\text{d}}_{\text{a}}} \text{=} \sqrt{\frac{{\text{δ}}_{\text{a}} {\text{- δ}}_{\text{s}}}{{\text{δ}}_{\text{b}} {\text{- δ}}_{\text{s}}}}$ wobei dₐ der Korndurchmesser eines Zementteilchens ist, d_{b} der Korndurchmesser eines Ferritteilchens, δₐ das spezifische Gewicht eines Zementteilchens, δ_{b} das spezifische Gewicht eines Ferritteilchens, und δₛ das spezifische Gewicht der Suspension aus Zement und Ferrit.

## Revendications

1. Procédé pour réutiliser une boue dans un procédé de stabilisation du sol dans lequel un agent de durcissement est injecté dans le sol, le procédé comprenant les étapes consistant à :
- ajouter une substance perméable à l'agent de durcissement devant être injecté;
- recueillir la boue déchargée lors de l'exécution du procédé de stabilisation du sol;
- mesurer un paramètre physique représentatif de la perméabilité de l'agent de durcissement auquel ladite substance perméable a été ajoutée, contenu dans ladite boue recueillie;
- calculer la quantité de l'agent de durcissement contenu dans la boue recueillie à partir de la mesure dudit paramètre physique;
- calculer la différence entre la quantité injectée de l'agent de durcissement qui est nécessaire à l'exécution du procédé de stabilisation du sol et la quantité de l'agent de durcissement contenu dans la boue recueillie; et
- utiliser la boue recueillie en même temps qu'une certaine quantité de l'agent de durcissement, auquel ladite substance perméable a été ajoutée, correspondant à la différence calculée dans ledit procédé de stabilisation du sol.

2. Procédé pour réutiliser une boue dans un procédé de stabilisation du sol selon la revendication 1, dans lequel on utilise du ciment comme agent de durcissement et de la ferrite comme substance perméable.

3. Procédé pour réutiliser une boue dans un procédé de stabilisation du sol selon la revendication 2, dans lequel on choisit les particules de ciment et les particules de ferrite de façon à satisfaire l'équation suivante :$\frac{{\text{d}}_{\text{h}}}{{\text{d}}_{\text{a}}} \text{=} \sqrt{\frac{{\text{δ}}_{\text{a}} {\text{- δ}}_{\text{s}}}{{\text{δ}}_{\text{b}} {\text{- δ}}_{\text{s}}}}$ dans laquelle dₐ est le diamètre des grains d'une particule de ciment, d_{b} est le diamètre des grains d'une particule de ferrite, δₐ est la gravité spécifique d'une particule de ciment, δ_{b} est la gravité spécifique d'une particule de ferrite, et δₛ est la gravité spécifique de la suspension de ciment et de ferrite.
